# EUROPEAN PATENT SPECIFICATION

(11) **EP 2 272 411 B1**
(45) Date of publication and mention of the grant of the patent: **20.06.2012**
(21) Application number: 10167896.9
(22) Date of filing: 30.06.2010
(51) Int. Cl.: A47J 37/07

(54) **Barbecue and lighting method thereof**
Grillvorrichtung und Anzündverfahren dafür
Barbecue et son procédé d'allumage

(30) Priority: 08.07.2009 IT BS20090133
(43) Date of publication of application: 12.01.2011
(73) Proprietor: FOKER S.r.l., 25030 Torbole Casaglia, (BS) (IT)
(72) Inventor: Cesaretto, Massimo, 25030 Torbole Casaglia, (BS) (IT)
(74) Representative: Pulieri, Gianluca Antonio

(56) References cited:
- WO-A-92/02765
- CA-A1- 2 540 940
- CH-A5- 662 498
- FR-A- 2 816 492
- US-A1- 2004 154 603

## Description

. The present invention relates to a barbecue and to a lighting method thereof.

. Barbecues for cooking and/or roasting foods using specific aids, such as solvents or inflammable tablets, are well know.

. However, the use of such products has a variety drawbacks.

. In particular, the combustion of such aids develops gaseous products containing toxic compounds, such as sulphur or nitrogen oxides, which inevitably come into contact with the foods to be cooked, even after lighting.

. As a result the gaseous combustion products, as well as altering the taste of the grilled food, contaminate it making it less healthy. Further barbecues are also known from WO 92/02765A, CA 2540940 A1, US 2004/154603 A1, CH 662498 A5 and FR 2816492 A.

. The present invention therefore sets out to solve the prior art drawbacks and, in particular, those mentioned above.

. Such purpose is achieved by a barbecue according to claim 1 and by a method according to claim 12. The dependent claims describe preferred embodiment variations.

. The object of the present invention will now be described in detail with the help of the attached drawings, wherein:

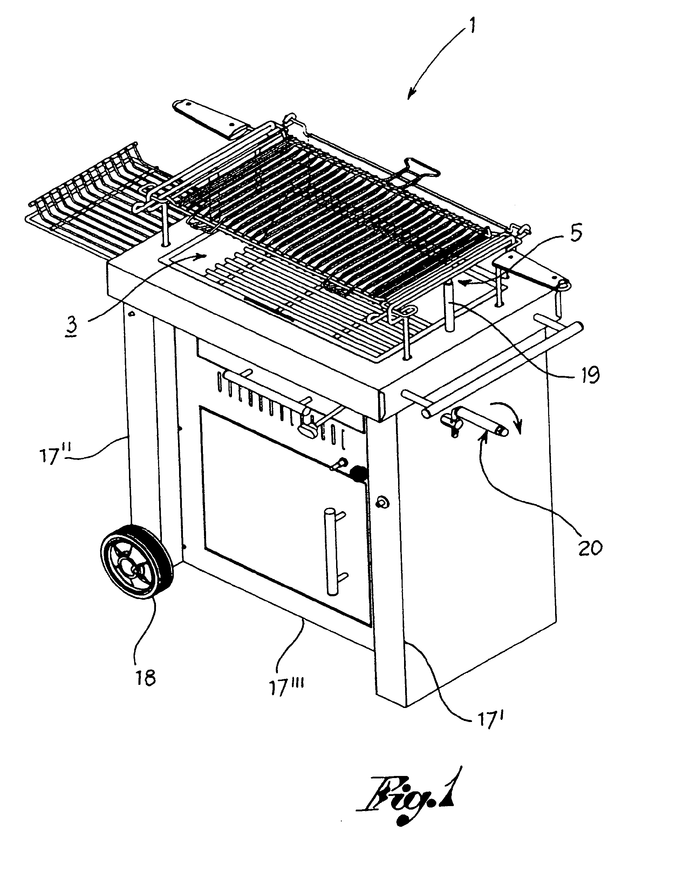

. - figure 1 shows a perspective view of a barbecue according to the present invention, in one possible embodiment;

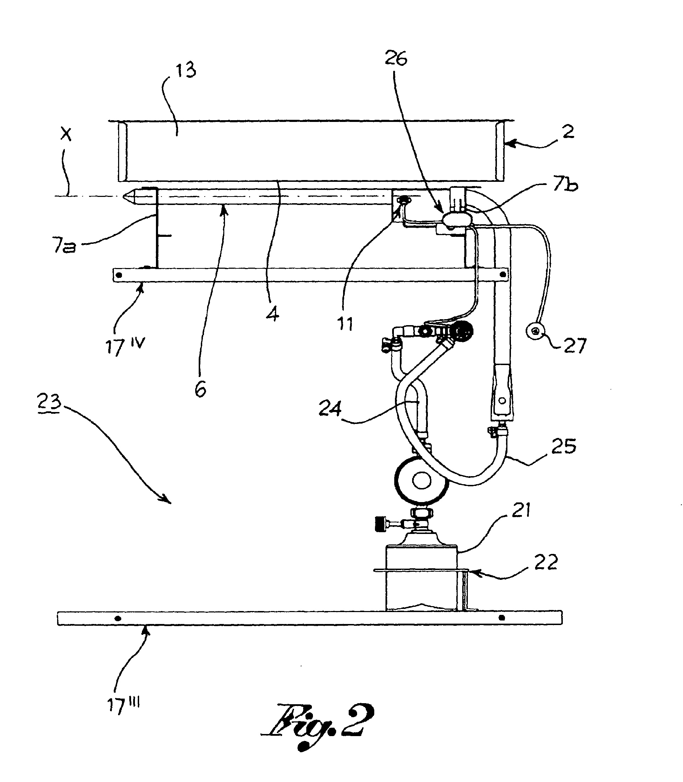

. - figure 2 shows a front view of the internal components of the barbecue in figure 1, according to one variation;

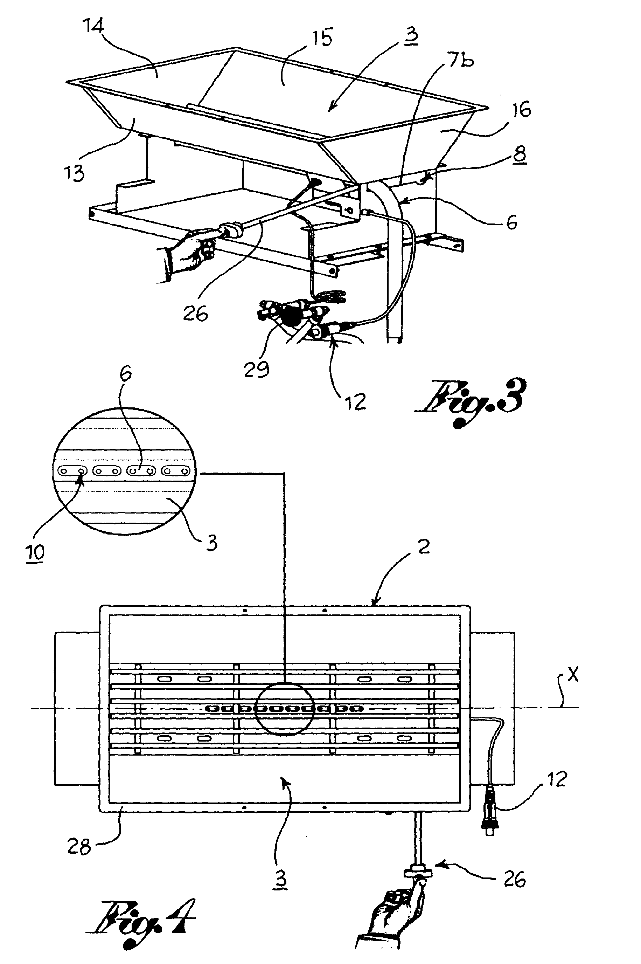

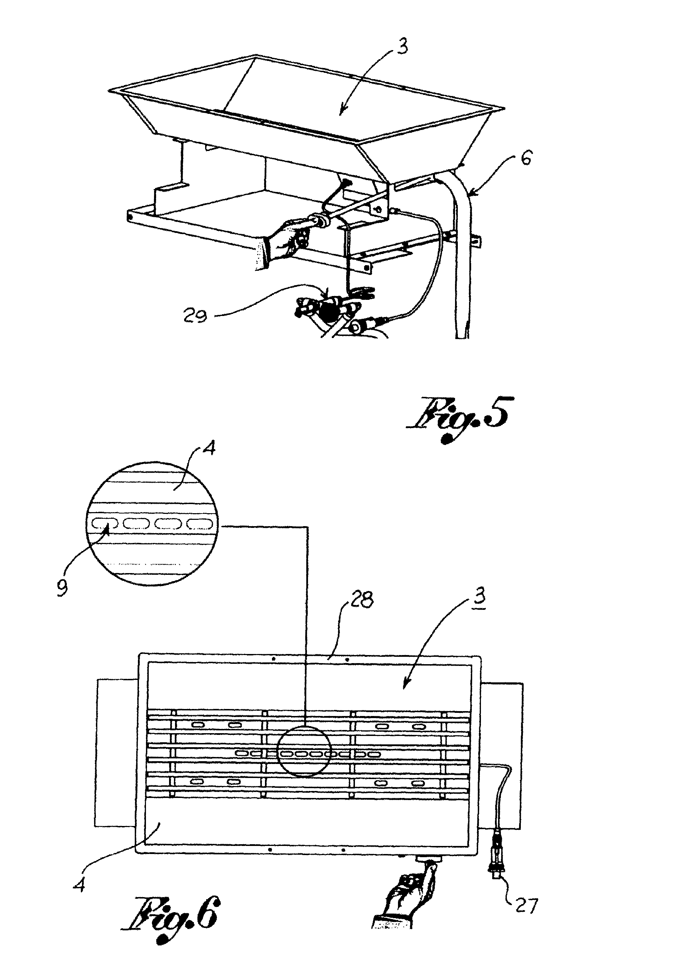

. - figures 3 and 5 show the barbecue in a lighting configuration and non-use configuration of the burner, respectively;

. - figures 4 and 6 show two views from above of the combustion basin corresponding to the configurations of figures 3 and 5, respectively.

. With reference to the aforesaid drawings, reference numeral 1 globally denotes a barbecue.

. The barbecue 1 comprises a combustion seat or basin 2, identifying a combustion compartment 3 suitable for at least partially housing a combustible product or a mixture thereof, for example wood, coal, charcoal or the like.

. In other words, the combustion compartment 3 is used for at least partially containing the combustible product, so that it does not come out of the compartment 3, especially after it has started to burn.

. The combustion compartment 3 is delimited on the underside by a basin bottom wall 4, suitable for supporting the combustible product and /or receiving the combustion residues.

. Consequently, the basin bottom wall 4 supports the combustible product in a suitable position for its combustion, and/or to receive the residues deriving from combustion, for example the ash.

. In the embodiment shown in the drawings, the combustion compartment 3 is delimited laterally by an annular wall 13, 14, 15, 16, connected to the basin bottom wall 4, which extends in a direction incident to the support surface identified by the basin bottom wall 4.

. According to one embodiment variation, the annular wall is made from a plurality of elements 13, 14, 15, 16 joined to each other, positioned so that the combustion compartment 3 has a flared profile towards the free rim 28 of the combustion basin 2, which delimits upwardly such compartment 3.

. Advantageously, such conformation of the combustion compartment 3 allows a favourable draught for the combustion of the combustible product, and furthermore gathers and concentrates the combustible product on the basin bottom wall 4, so that such product is entirely consumed during use of the barbecue.

. According to the variation shown, the barbecue 1 further comprises a frame 17^{I}, 17^{II}, 17^{III}, 17^{IV} identifying a support for the combustion basin 2.

. Preferably, the barbecue 1 is movable.

. In fact, according to a preferred embodiment, it comprises at least one wheel 18 joined to the frame 17^{I}, 17^{II}, 17^{III}, 17^{IV} which facilitates transport of the barbecue 1.

. Advantageously, therefore, the barbecue of the present invention can easily be transported to a different place of use.

. The barbecue 1 further comprises at least one cooking grill 5 suitable for keeping a foodstuff over the combustion basin 2, to allow cooking of the latter.

. Preferably, the height of the cooking grill 5 is adjustable, i.e. the grill 5 can be brought closer to or further from the combustion basin 2.

. Consequently, advantageously, the distance of the grill 5 from the basin 2 can be selected e.g. depending on the type of food to be cooked, the fat contents of the same, or the cooking steps.

. Preferably, the barbecue 1 comprises height adjustment means of the grill 5, wherein such means comprise at least one adjustment rod 19 joined to the grill 5, for example at a first end, suitable for being manually shifted vertically, for example by means of a system comprising at least one pull rope sliding on at least one pulley.

**.** Consequently, the rotation of the knob 20 (e.g. in the direction of the arrow) produces a vertical movement of the grill 5, in that the knob interacts with the adjustment rod 19 by means of a linkage (not shown) thereby raising/lowering the grill 5.

. Advantageously, therefore, the height of the grill 5 is suitable for being regulated without the user having to touch hot parts of the grill, thereby in total safety.

**.** The barbecue further comprises lighting means of the combustible product, operatively connected to the combustion basin 2 so as to start and/or sustain combustion of the combustible product.

. In other words, the lighting means are positioned in a suitable position, in relation to the basin 2, to allow at least starting of the combustion of the combustible product.

. In addition, the lighting means comprise at least one gas-fuelled burner 6, for example GPL-fuelled.

. Innovatively, the barbecue of the present invention allows to start combustion of the combustible product without the specific aids traditionally used, such as solvents or inflammable tablets.

. In fact the combustion of such aids develops gaseous products containing toxic compounds, such as sulphur or nitrogen oxides, which inevitably come into contact with the foods to be cooked, even after lighting.

. Innovatively, for such purpose, the barbecue according to the invention uses instead a hydrocarbon gas, preferably GPL, whose combustion generates solely water vapour and carbon dioxide.

. Other preferred embodiments of the present invention envisage a butane-, propane- or gas mixture-fuelled burner 6.

. According to one embodiment, the burner 6 is fuelled by a cylinder or cartridge 21, preferably positioned in a cartridge seat 22 housed inside a compartment 23 delimited by the frame 17^{I}, 17^{II}, 17^{III}, 17^{IV}.

. Advantageously, the frame 17^{I}, 17^{II}, 17^{III}, 17^{IV} is suitable for housing the cylinder 21 and necessary gas fuel pipes 24, 25 to the burner, inside it, so as to conceal them at least partially from view, and reduce their visual impact.

. Preferably, the burner 6 is at least partially positioned below the combustion compartment 3 and, even more preferably, at least partially below the basin bottom wall 4.

. This way, advantageously, the burner is positioned in a suitable position for starting and/or sustaining combustion of the combustible product, without however coming into direct contact with it.

. In addition, advantageously, the combustible product is positioned above the burner, so that such product can be entirely consumed by the combustion.

**.** Even more preferably, the burner 6 is movable between at least one lighting configuration, wherein it is positioned in a suitable position for starting and/or sustaining the combustion of the combustible product, and a non-use configuration, wherein it is moved away from the combustion basin 2.

. Consequently, the burner 6 can be used in a starting phase of the combustion, to be subsequently moved away from the combustion basin 2, when for example the charcoal burns on its own.

. In other words, the burner is available only when needed.

. According to one preferred variation, the burner 6 is manually movable.

. According to one advantageous embodiment variation, shown in figures 3 and 5, the barbecue 1 comprises an operating lever 26 operatively connected to the burner 6, to move it from the lighting configuration to the non-use configuration.

. Consequently, the operating lever 26 can be operated by the user to convert the burner from one to the other of the two aforementioned configurations.

. Preferably, the operating lever 26 comprises at least one portion in non heat-conductive material, so that the movement of the burner can be advantageously performed in total safety for the user.

. According to one preferred embodiment variation, the burner 6 is slidable beneath the combustion basin 2 along at least one translation guide 7a, 7b, preferably a pair thereof.

. According to one embodiment, the translation guide 7a, 7b is connected to the surface of the basin bottom wall 4 facing opposite the combustion compartment 3.

. Preferably, the translation guide 7a, 7b has end-stroke means for the burner 6 in the lighting and/or non-use configurations.

. For example, the end-stroke means comprise at least one depression 8 of the guide 7a, 7b suitable for housing the burner 6.

. Consequently, advantageously, the burner 6 is suitable for being accurately positioned at least in the configurations shown, without making other, undesired intermediate movements.

. Preferably, the basin bottom wall 4 has at least a first through hole or slot 9 to place the burner 6 in communication with the combustion compartment 3.

. This way, advantageously, the presence of at least one through hole 9, and preferably of a plurality of such, permits efficient transmission of the heat generated by the burner, in that the heat path towards the combustion compartment is not obstructed.

. According to a preferred variation, the burner 6 comprises a tubular element, which extends along a burner axis X and radially defines at least one nozzle 10 for the transit of the gas and/or of a flame generated by the combustion of the gas.

. Preferably, the tubular element identifies a plurality of axially spaced nozzles for uniform heat distribution.

**.** According to one variation, the number of nozzles 10 is substantially double the number of through holes 9.

. Preferably, when the burner 6 is positioned in the lighting configuration, the first through hole 9 and the nozzle 10 have at least partially overlapping lumina, as shown for example in the enlargement in figure 4.

. Advantageously such disposition, as well as permitting better heat transmission, prevents the basin bottom wall 4 from being damaged by direct contact with the flame coming out of the burner nozzles.

. According to one variation, the pair of translation guides 7a, 7b are distanced along the burner axis X, for example at the axial ends of the tubular element.

. According to the invention the barbecue 1 further comprises heat detection means, for example a thermocouple 11, suitable for measuring the temperature of the burner 6 and/or of the combustion basin 2.

. This way, the heat detection means are suitable for detecting if the temperature of such components exceeds a predefined value, for example a safety threshold, or if the temperature falls below such value.

. According to one preferred variation, the barbecue 1 further comprises control and management means suitable for allowing/preventing the supply of gas to the burner 6.

. For example, the control and management means comprise a logic unit joined to at least one solenoid valve or motorised valve, the latter 29 being positioned along one of the supply ducts 24, 25 of the gas to the burner 6.

. Preferably, the heat detection means are operatively connected to the control and management means so that, when the heat detection means detect a temperature above or below a predefined value, the control and management means are suitable for preventing the supply of gas to the burner 6.

. Advantageously, the barbecue of the present invention is therefore suitable for preventing domestic accidents, e.g. caused by inadvertently leaving the burner on.

. Advantageously, in addition, the barbecue of the present invention is suitable for preventing inadvertent gas leaks in the event of accidental extinguishing of the burner.

. Preferably, the control and management means comprise a solenoid valve with a thermo-magnet operatively connected to a thermocouple.

. Preferably, the control and management means comprise timer means, suitable for discontinuing the gas supply to the burner 6 after a predefined time length.

. E.g. the timer means are suitable for making the solenoid valve close 30 seconds, 3, 5 or 10 minutes after lighting of the burner, suitable for being detected through the thermocouple.

. Preferably, the control and management means are activated when the burner 6 is moved towards the non-use configuration.

. Consequently, advantageously, the burner 6 is prevented from remaining lit in the non-use configuration, thereby preventing the upper support surfaces of the barbecue from becoming dangerously red-hot.

**.** Preferably, the heat detection means are joined to the combustion basin 2.

. This way, advantageously, when the burner is moved from the lighting configuration, in which the flame heats the thermocouple, to the non-use configuration, moved away from the thermocouple, the thermocouple detects a consequent cooling and interrupts the gas supply to the burner.

. A similar procedure is triggered when the burner remains in the lighting configuration but is accidentally extinguished, for example by a gust of wind.

. According to a further advantageous variation, the barbecue further comprises flame generator means, e.g. electric, joined to the burner 6, suitable for generating a pilot flame, spark or the like to light the gas.

. Preferably, the flame generator means comprise a piezoelectric device or electromechanical generator 12, e.g. activated by the user through an ignition button 27.

. The present invention further relates to a lighting method a barbecue 1 made according to any of the above embodiments.

. Such method comprises the steps of supplying a combustible product or mixture thereof, for example wood, coal, charcoal or the like and positioning it on the basin bottom wall 4, so that such product is at least partially contained in the combustion compartment 3.

. Subsequently, the burner 6 is moved towards the lighting configuration, the gas is supplied to the burner 6, and a pilot flame, spark or the like generated to light the gas.

. This way, the combustion of the combustible product is started and/or sustained via the burner.

. Preferably, the method further comprises a step of moving the burner 6 towards the nqn-use configuration.

. According to the invention, the method further comprises a step of measuring the temperature of the burner 6 and/or of the combustion basin 2.

. According to one advantageous variation, the method lastly comprises a step of preventing the supply of gas to the burner 6.

. Advantageously, the steps of moving the burner 6 and of measuring the temperature take place at least partially simultaneously.

. Preferably, the step of preventing the gas supply occurs subsequently to the step of measuring the temperature.

. Even more preferably, the step of measuring the temperature occurs in the absence of the step of moving the burner 6.

. A person skilled in the art may make variations to the aforesaid embodiments of the barbecue and method or substitute elements with others functionally equivalent, so as to satisfy specific requirements.

. For example, the basin bottom wall may be substituted by a support grill, or could be used in conjunction with a grill.

. Also such variations fall within the scope of protection as defined by the following claims.

. Furthermore, each variation described as belonging to a possible embodiment may be realised independently of the other variations described.

## Claims

1. Barbecue (1) comprising:
- a combustion seat or basin (2), identifying a combustion compartment (3) suitable for at least partially housing a combustible product or a mixture thereof, such as wood, coal, charcoal or similar;
the combustion basin (3) being delimited on the underside by a basin bottom wall (4) suitable for supporting the combustible product and/or receiving the combustion residues;
- a cooking grill (5) suitable for keeping a foodstuff over the combustion basin (2);
- lighting means of the combustible product, operatively connected to the combustion basin (2) so as to start and/or sustain the combustion of the combustible product, said lighting means comprising at least one gas-fuelled, for example GPL-fuelled, burner (6);
said barbecue (1) being **characterized in that** it further comprises heat detection means, such as a thermocouple (11), suitable for measuring the temperature of the burner (6) and/or of the combustion basin (2).

2. Barbecue (1) according to claim 1, wherein the burner (6) is at least partially positioned below the combustion compartment (3).

3. Barbecue (1) according to claim 1 or 2, wherein the burner (6) is movable, for example manually, from at least a lighting configuration, wherein it is suitably positioned to start and/or sustain the combustion of the combustible product, and a non-use configuration, wherein it is moved away from the combustion basin (2).

4. Barbecue (1) according to any of the previous claims, wherein the burner (6) is slidable beneath the combustion basin (2) along at least one translation guide (7a, 7b).

5. Barbecue (1) according to claim 4, wherein the translation guide (7a, 7b) has end-stroke means for the burner (6) in the lighting and/or non-use configurations, for example at least one depression (8) of the guide (7a, 7b) suitable for housing the burner (6).

6. Barbecue (1) according to any of the previous claims, wherein the basin bottom wall (4) has at least a first through hole or slot (9) to place the burner (6) in communication with the combustion compartment (3).

7. Barbecue (1) according to any of the previous claims, wherein the burner (6) comprises a tubular element, which extends along a burner axis (X) and which radially defines at least one nozzle (10) for the passage of the gas and/or of a flame generated by the combustion of the gas.

8. Barbecue (1) according to the claims 3, 6 and 7, wherein, in the lighting configuration, the first through hole (9) and the nozzle (10) have at least partially overlapping lumina.

9. Barbecue (1) according to any of the previous claims, further comprising control and management means suitable for allowing/preventing the supply of the gas to the burner (6).

10. Barbecue (1) according to claim 9, wherein the heat detection means are operatively connected to the control and management means and wherein, when the heat detection means detect a temperature above or below a predefined value, the control and management means are suitable for preventing the supply of gas to the burner (6).

11. Barbecue (1) according to claim 3 and according to claim 9 or 10, wherein the control and management means are activated when the burner (6) is moved towards the non-use configuration.

12. Method of lighting a barbecue (1) made according to any of the previous claims, comprising the steps of:
- providing a combustible product or mixture thereof, such as wood, coal, charcoal or similar, positioning it on the basin bottom wall (4);
- moving the burner (6) to the lighting configuration;
- supplying gas to the burner (6);
- generating a pilot flame, a spark or similar to light the gas;
- starting and/or sustaining the combustion of the combustible product; and
- measuring the temperature of the burner (6) and/or of the combustion basin (2).

13. Method according to claim 12, further comprising a step of moving the burner (6) towards the non-use configuration.

14. Method according to claim 12 or 13, further comprising a step of preventing the supply of gas to the burner (6).

## Patentansprüche

1. Grillvorrichtung (1) mit:
- einer Verbrennungs-schale oder -behälter (2), die eine Brennkammer (3) aufweist, geeignet für die mindestens teilweise Aufnahme eines brennbaren Produktes oder einer Mischung brennbarer Produkte, zum Beispiel Holz, Kohle, Holzkohle oder Ähnlichem, wobei der Verbrennungsbehälter (2) an der Unterseite durch einen Behälterboden (4) gebildet wird, der dazu geeignet ist, das brennbare Produkt und/oder die Verbrennungsrückstände aufzunehmen;
- einem Grillrost (5), das geeignet ist, das Grillgut über dem Verbrennungsbehälter (2) zu halten;
- einer Zündvorrichtung für das brennbare Produkt, die mit dem Verbrennungsbehälter (2) verbunden ist, um die Verbrennung des brennbaren Produkts zu zünden und/oder die Verbrennung aufrecht zu halten und die Zündvorrichtung mindestens einen gasbefüllten, beispielsweise einen GPL-befüllten, Brenner (6) aufweist; **dadurch gekennzeichnet, dass** die Grillvorrichtung (1) eine Temperaturmessvorrichtung, wie zum Beispiel einen Thermokoppler (11), geeignet für die Temperaturmessung des Brenners (6) und/oder des Verbrennungsbehälters (2) aufweist.

2. Grillvorrichtung (1) nach Anspruch 1, wobei der Brenner (6) zumindest teilweise unterhalb des Verbrennungsbehälters (3) angeordnet ist.

3. Grillvorrichtung (1) nach Anspruch 1 oder 2, wobei der Brenner (6) bewegbar ist, zum Beispiel manuell, in mindestens eine Zündkonfiguration in der der Brenner (6) so positioniert ist, dass die Verbrennung des brennbaren Produktes gezündet und/oder aufrechterhalten werden kann, und in eine Konfiguration, in der der Brenner (6) nicht verwendet wird und von dem Verbrennungsbehälter (2) entfernt wird.

4. Grillvorrichtung (1) nach einem der vorhergehenden Ansprüche, wobei der Brenner (6) unterhalb des Verbrennungsbehälters (2) entlang mindestens einer Translationsführung (7a, 7b) verschiebbar ist.

5. Grillvorrichtung (1) nach Anspruch 4, wobei die Translationsführung (7a, 7b) Aufnahmevorrichtungen, zum Beispiel mindestens eine Vertiefung (8) der Translationsführung (7a, 7b), für den Brenner (6) in der Zündkonfiguration und/oder in der Nichtnutzungskonfiguration aufweist, die geeignet sind, den Brenner (6) in Position zu halten.

6. Grillvorrichtung (1) nach einem der vorhergehenden Ansprüche, wobei der Behälterboden (4) mindestens ein erstes Loch oder einen Schlitz (9) aufweist, um den Brenner (6) mit der Brennkammer (3) in Verbindung zu setzen.

7. Grillvorrichtung (1) nach einem der vorhergehenden Ansprüche, wobei der Brenner (6) ein rohrförmiges Element aufweist, das sich entlang einer Brennerachse (X) erstreckt und das in radialer Richtung mindestens eine Düse (10) für den Durchtritt des Gases und/oder für eine bei der Verbrennung des Gases entstehende Flamme ausgebildet ist.

8. Grillvorrichtung nach den Ansprüchen 3, 6 und 7, wobei in der Zündkonfiguration, das ersten Loch (9) und die Düse (10) zumindest teilweise überlappende Öffnungen aufweisen.

9. Grillvorrichtung (1) nach einem der vorhergehenden Ansprüche, wobei die Grillvorrichtung (1) Kontroll- und Steuerungsmittel aufweist, die geeignet sind, die Gaszufuhr zum Brenner (6) zu erlauben/verhindern.

10. Grillvorrichtung nach Anspruch 9, wobei die Temperaturmessvorrichtung mit dem Kontroll- und Steuerungsmittel verbunden ist und die Kontroll- und Steuerungsmittel die Gaszufuhr des Brenners (6) unterbrechen kann, wenn die Temperaturmesseinrichtung eine Temperatur über- oder unterhalb eines vorgegebenen Wertes ermittelt.

11. Grillvorrichtung nach Anspruch 3 und nach Anspruch 10 oder 11, wobei die Kontroll- und Steuerungsmittel aktiviert werden, wenn der Brenner (6) in die Nichtnutzungskonfiguration bewegt wird.

12. Verfahren zum Zünden eines Grills (1), nach einem der vorhergehenden Ansprüche, umfassend die folgenden Schritte:
- Bereitstellung eines brennbaren Stoffes oder einer Mischung aus beispielsweise Holz, Kohle, Holzkohle oder dergleichen und Positionierung auf dem Behälterboden (4);
- Gaszufuhr zum Brenner (6);
- Erzeugung einer Zündflamme, eines Funken oder Ähnlichem zum Zünden des Gases;
- Zünden und/oder Aufrechterhaltung der Verbrennung des brennbaren Produktes; und
- Messung der Temperatur des Brenners (6) und/oder des Verbrennungsbehälters (2).

13. Verfahren nach Anspruch 12, umfasst ferner einen Bewegungsschritt des Brenners (6) in die Nichtnutzungskonfiguration.

14. Verfahren nach Anspruch 12 oder 13, umfasst ferner einen Schritt zur Temperaturmessung des Brenners (6) und/oder des Verbrennungsbehälters (2) und/oder zur Unterbrechung der Gaszufuhr zum Brenner (6).

## Revendications

1. Barbecue (1) comprenant:
- un logement ou bac de combustion (2), identifiant un compartiment de combustion (3) approprié pour loger, au moins partiellement, un produit combustible ou un mélange de ce dernier, tel que du bois, du charbon, du charbon de bois ou similaire;
le bac de combustion (3) étant délimité, sur le dessous, par une paroi inférieure (4) de bac appropriée pour supporter le produit combustible et/ou pour recevoir les résidus de combustion;
- un gril de cuisson (5) approprié pour maintenir les aliments au-dessus du bac de combustion (2);
- un moyen d'allumage du produit combustible, fonctionnellement relié au bac de combustion (2) de manière à démarrer et/ou à maintenir la combustion du produit combustible, ledit moyen d'allumage comprenant au moins un brûleur à gaz (6), par exemple au GPL;
ledit barbecue (1) étant **caractérisé en ce qu'**il comprend en outre un moyen de détection de chaleur, tel qu'un thermocouple (11), approprié pour mesurer la température du brûleur (6) et/ou du bac de combustion (2).

2. Barbecue (1) selon la revendication 1, dans lequel le brûleur (6) est positionné, au moins partiellement, sous le compartiment de combustion (3).

3. Barbecue (1) selon la revendication 1 ou 2, dans lequel le brûleur (6) est mobile, par exemple manuellement, entre au moins une configuration d'allumage, dans laquelle il est positionné de façon appropriée pour démarrer et/ou pour maintenir la combustion du produit combustible, et une configuration de non-utilisation, dans laquelle il est éloigné du bac de combustion (2).

4. Barbecue (1) selon l'une quelconque des revendications précédentes, dans lequel le brûleur (6) peut glisser sous le bac de combustion (2) le long d'au moins un guide de déplacement (7a, 7b).

5. Barbecue (1) selon la revendication 4, dans lequel le guide de déplacement (7a, 7b) comporte un moyen de fin de course pour le brûleur (6) dans les configurations d'allumage et/ou de non-utilisation, par exemple au moins un renfoncement (8) du guide (7a, 7b) approprié pour loger le brûleur (6).

6. Barbecue (1) selon l'une quelconque des revendications précédentes, dans lequel la paroi inférieure (4) de bac comporte au moins un premier trou traversant ou fente (9) pour mettre le brûleur (6) en communication avec le compartiment de combustion (3).

7. Barbecue (1) selon l'une quelconque des revendications précédentes, dans lequel le brûleur (6) comprend un élément tubulaire, qui s'étend le long d'un axe (X) de brûleur et qui délimite radialement au moins une buse (10) servant au passage du gaz et/ou d'une flamme générée par la combustion du gaz.

8. Barbecue (1) selon les revendications 3, 6 et 7, dans lequel, dans la configuration d'allumage, le premier trou traversant (9) et l'ajustage (10) ont des lumières qui se chevauchent au moins partiellement.

9. Barbecue (1) selon l'une quelconque des revendications précédentes, comprenant en outre un moyen de commande et de gestion approprié pour autoriser/empêcher l'acheminement du gaz jusqu'au brûleur (6).

10. Barbecue (1) selon la revendication 9, dans lequel le moyen de détection de chaleur est fonctionnellement relié au moyen de commande et de gestion, et dans lequel, lorsque le moyen de détection de chaleur détecte une température supérieure ou inférieure à une valeur prédéfinie, le moyen de commande et de gestion est approprié pour empêcher l'acheminement de gaz jusqu'au brûleur (6).

11. Barbecue (1) selon la revendication 3 et selon la revendication 9 ou 10, dans lequel le moyen de commande et de gestion est activé lorsque le brûleur (6) est déplacé vers la configuration de non-utilisation.

12. Procédé d'allumage d'un barbecue (1) fabriqué selon l'une quelconque des revendications précédentes, comprenant les étapes consistant à:
- utiliser un produit combustible ou un mélange de ce dernier, tel que du bois, du charbon, du charbon de bois ou similaire, en le positionnant sur la paroi inférieure (4) de bac;
- déplacer le brûleur (6) jusqu'à la configuration d'allumage;
- acheminer du gaz jusqu'au brûleur (6);
- générer une flamme pilote, une étincelle ou similaire afin d'allumer le gaz;
- démarrer et/ou maintenir la combustion du produit combustible; et
- mesurer la température du brûleur (6) et/ou du bac de combustion (2).

13. Procédé selon la revendication 12, comprenant en outre une étape consistant à déplacer le brûleur (6) vers la configuration de non-utilisation.

14. Procédé selon la revendication 12 ou 13, comprenant en outre une étape consistant à empêcher l'acheminement de gaz jusqu'au brûleur (6).
